(19) Europäisches Patentamt
European Patent Office
Office européen des brevets

(11) EP 1 080 115 B1

# (12) FASCICULE DE BREVET EUROPEEN

(45) Date de publication et mention de la délivrance du brevet:
**05.06.2002 Bulletin 2002/23**

(21) Numéro de dépôt: **99910446.6**

(22) Date de dépôt: **29.03.1999**

(51) Int Cl.$^7$: **C08B 37/16**, A01N 47/46

(86) Numéro de dépôt international:
**PCT/FR99/00720**

(87) Numéro de publication internationale:
**WO 99/50307 (07.10.1999 Gazette 1999/40)**

(54) **COMPLEXES D'INCLUSION DANS DES CYCLODEXTRINES DE PRECURSEURS NATURELS D'ISOTHIOCYANATES, LEUR PREPARATION ET LEUR UTILISATION**

EINSCHLUSSVERBINDUNGEN MIT CYCLODEXTRINEN VON NATÜRLICHEN ISOTHIOCYANATVORLÄUFERN, DEREN HERSTELLUNG UND VERWENDUNG

COMPLEXES FOR IMMOBILISING ISOTHIOCYANATE NATURAL PRECURSORS IN CYCLODEXTRINS, PREPARATION AND USE

(84) Etats contractants désignés:
**CH DE GB IT LI NL SE**

(30) Priorité: **31.03.1998 FR 9803961**

(43) Date de publication de la demande:
**07.03.2001 Bulletin 2001/10**

(73) Titulaire: **Commissariat à l'Energie Atomique**
**75008 Paris (FR)**

(72) Inventeurs:
- **ROSELLI, Cécile**
  **F-92370 Chaville (FR)**
- **PERLY, Bruno**
  **F-78320 La Verrière (FR)**
- **ROLLIN,Patrick**
  **45000 ORLEANS (FR)**

(74) Mandataire: **Des Termes, Monique et al**
**Société Brevatome**
**3, rue du Docteur Lancereaux**
**75008 Paris (FR)**

(56) Documents cités:
**EP-A- 0 621 287**

- **DATABASE WPI Week 9427 Derwent Publications Ltd., London, GB; AN 94-222253 XP002088850 & JP 06 158002 A (SEKISUI PLASTICS CO LTD) , 7 juin 1994**
- **DATABASE WPI Week 9648 Derwent Publications Ltd., London, GB; AN 96-482050 XP002088851 & JP 08 245302 A (SEKISUI PLASTICS CO LTD) , 24 septembre 1996**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

### Domaine technique

La présente invention a pour objet des complexes formés par inclusion de précurseurs d'origine naturelle d'isothiocyanates organiques dans des cyclodextrines.

Elle concerne en particulier la solubilisation et/ou la libération contrôlée d'agents bactériostatiques, bactéricides et/ou fongicides constitués d'isothiocyanates organiques, à partir de tels complexes.

Elle concerne également des compositions bactériostatiques, bactéricides et/ou fongicides comprenant de tels complexes, utilisables dans le domaine alimentaire et agro-alimentaire.

### Etat de la technique antérieure

Les isothiocyanates organiques sont connus pour présenter de remarquables propriétés bactério- et fongistatiques, et leur activité pour le contrôle de la prolifération de micro-organismes aérobies et anaérobies a été bien identifiée, comme il est décrit dans « Antimicrobial Properties of Isothiocyanates in Food Preservation » de P.J. Delaquis et G. Mazza, édité par James Giese dans « Food Technology », novembre 1995, pages 73 à 84, [1].

Toutefois, leurs propriétés physiques (ce sont le plus souvent des liquides volatils) rend leur utilisation très difficile pour des applications alimentaires ou agro-alimentaires, en raison d'une impossibilité de maîtriser les doses minimales assurant le processus de conservation sans nuire aux propriétés organoleptiques de la denrée à conserver.

### Exposé de l'invention

La présente invention a précisément pour objet des compositions bactériostatiques, bactéricides et/ou fongicides dans lesquelles l'isothiocyanate organique est stabilisé sous la forme de complexe d'inclusion dans une cyclodextrine, ce qui permet d'assurer sa solubilisation dans un milieu aqueux et de maîtriser sa libération.

Selon l'invention, le complexe d'inclusion est constitué d'un précurseur naturel d'un isothiocyanate organique inclus dans une cyclodextrine.

Selon l'invention l'isothiocyanate organique répond de préférence à la formule :

$$R^1 - N = C = S \qquad (I)$$

dans laquelle $R^1$ représente un groupe alkyle, linéaire ou ramifié, de 1 à 6 atomes de carbone ; un groupe alcényle, linéaire ou ramifié, de 2 à 6 atomes de carbone ; un groupe arylalkyl dans lequel le groupe alkyle a 1 à 6 atomes de carbone ; un groupe de formule :

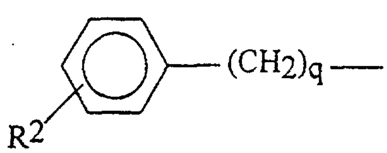

dans laquelle q = 1 ou 2 et $R^2$ représente un atome d'hydrogène ou un groupe alkyle ou alcoxyle de 1 à 3 atomes de carbone, le substituant $R^2$ étant en position ortho, para ou méta ; un groupe de formule $R^3CO(CH_2)_n$- dans laquelle $R^3$ est un groupe alkyle de 1 à 3 atomes de carbone et n est un nombre entier égal à 3 ou 4 ; un groupe de formule $R^3OCO(CH_2)_n$- dans laquelle $R^3$ et n sont tels que définis ci-dessus ; un groupe méthylthioalkyle de formule $CH_3S(CH_2)_p$- dans laquelle p est un nombre entier de 1 à 10 ; ou un groupe de formule $CH_3$-S-CH=CH-$(CH_2)_r$- dans laquelle r est un nombre entier de 1 à 8.

A titre d'exemple de tels isothiocyanates, on peut citer ceux pour lesquels $R^1$ a la signification donnée dans le tableau annexé.

Le précurseur naturel d'isothiocyanate organique, ou glucosinolate, peut répondre à la formule :

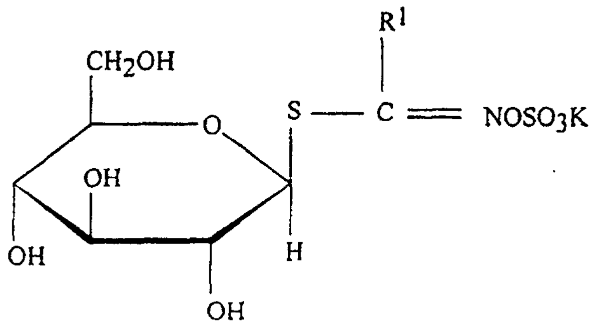

(IV)

dans laquelle $R^1$ a la signification donnée ci-dessus.

Ces précurseurs naturels peuvent être en particulier ceux mentionnés dans le tableau annexé.

Ces précurseurs naturels peuvent être obtenus à partir de sources végétales telles que celles répertoriées également dans le tableau annexé.

La cyclodextrine utilisée dans le complexe d'inclusion décrit ci-dessus peut être une cyclodextrine naturelle ou une cyclodextrine chimiquement modifiée.

On rappelle que les cyclodextrines ou cyclomaltooligosaccharides sont des composés d'origine naturelle, formés par l'enchaînement d'unités glucose, liés en $\alpha$-1,4.

Les cyclodextrines naturelles sont l'$\alpha$-cylodextrine qui comporte 6 unités glucose, la $\beta$-cyclodextrine qui comporte 7 unités glucose, et la $\gamma$-cyclodextrine qui comporte 8 unités glucose. De nombreux travaux ont montré que ces cyclodextrines pouvaient former des complexes d'inclusion avec des molécules hydrophobes, permettant ainsi leur solubilisation dans des milieux aqueux et leur utilisation dans diverses industries, comme il est décrit dans l'ouvrage intitulé : « Cyclodextrins and their Industrial Uses », édité par D. Duchêne aux Editions de Santé en 1987, pages 299 à 326, [2].

Selon l'invention, on peut utiliser non seulement une cyclodextrine naturelle mais également une cyclodextrine naturelle modifiée chimiquement par adjonction de substituants appropriés. Une telle cyclodextrine modifiée peut répondre à la formule :

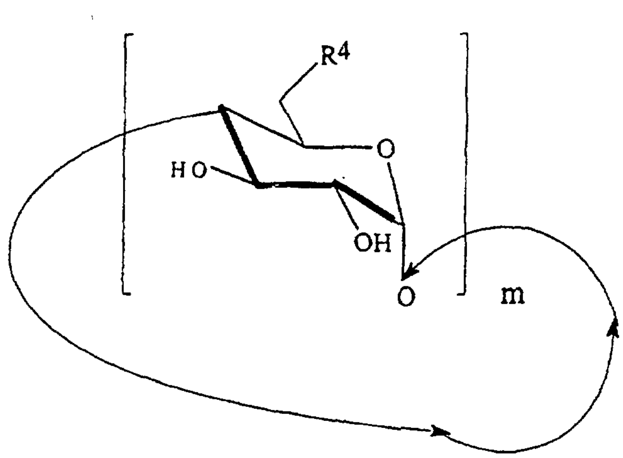

(II)

dans laquelle m = 6, 7 ou 8 et les R4 qui peuvent être identiques ou différents, représentent OH ou un groupe choisi parmi les groupes X-alkylés ou X-arylés dans lesquels X représente un atome de carbone ou un hétéroatome à condition que l'un au moins des $R^4$ ne soit pas OH.

Dans ce cas, les substituants $R^4$ de la cyclodextrine sont choisis de façon à améliorer ses propriétés, notamment en ce qui concerne la solubilisation et la stabilisation des isothiocyanates organiques.

Selon l'invention, on peut préparer le complexe d'inclusion d'un précurseur naturel d'un isothiocyanate organique dans une cyclodextrine à partir d'une solution aqueuse de cyclodextrine par addition à cette solution du précurseur naturel. Les cyclodextrines utilisables sont celles décrites précédemment.

De la sorte, on peut former le complexe d'inclusion soit sous forme de solution aqueuse, soit sous forme de

précipité que l'on sépare ensuite de la solution. Dans ce dernier cas, on peut partir d'une solution aqueuse saturée de cyclodextrine.

Selon l'invention, on peut utiliser les complexes d'inclusion de précurseurs naturels d'isothiocyanates organiques dans des cyclodextrines pour préparer un complexe d'inclusion d'un isothiocyanate organique dans une cyclodextrine.

En effet, on sait que ces précurseurs naturels d'isothiocyanates organiques peuvent être convertis en les isothiocyanates correspondants par réaction d'hydrolyse avec la myrosinase selon le schéma réactionnel suivant :

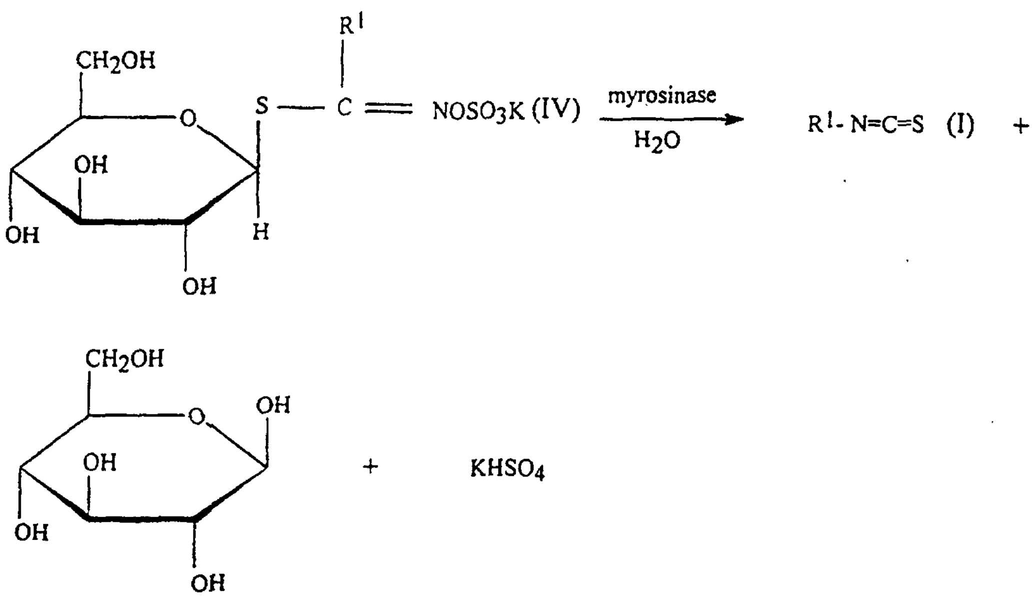


(IV)

(I)

La myrosinase est un enzyme naturellement présent dans les crucifères. L'hydrolyse enzymatique du précurseur naturel de formule (IV) par la myrosinase conduit à l'isothiocyanate organique correspondant ainsi qu'à la libération d'une molécule de D-glucose et de sulfate acide de potassium.

Selon l'invention, on a découvert que l'on pouvait préparer un complexe d'inclusion à base d'isothiocyanate organique à partir d'un complexe d'inclusion contenant le précurseur naturel de cet isothiocyanate par action de la myrosinase sur ce complexe.

Aussi, la présente invention a également pour objet un procédé de préparation d'un complexe d'inclusion constitué d'un isothiocyanate organique inclus dans une cyclodextrine, qui comprend les étapes suivantes :

a) préparer en solution aqueuse un complexe d'inclusion d'un précurseur naturel d'un isothiocyanate organique et de cyclodextrine, et

b) soumettre le complexe ainsi obtenu à l'action de la myrosinase en solution aqueuse pour transformer le précurseur naturel inclus dans la cyclodextrine en l'isothiocyanate organique correspondant.

Dans ce cas, la solution aqueuse utilisée dans la seconde étape et éventuellement dans la première étape est une solution convenant à l'hydrolyse par la myrosinase. Il peut s'agir d'une solution tampon telle qu'une solution de tampon phosphate à pH 6.

L'invention a encore pour objet une une composition bactériostatique, bactéricide et/ou fongicide, constituée d'un mélange sec comprenant :

a) un complexe d'inclusion d'un précurseur naturel d'un isothiocyanate organique à propriétés bactéricides, bactériostatiques et/ou fongicides dans une cyclodextrine, et

b) de la myrosinase.

A titre d'exemple, la composition peut être sous la forme de poudre, de granules, de poudre mouillable, etc. Cette composition peut comprendre des véhicules et additifs appropriés tels que ceux généralement utilisés pour la fabrication de produits bactériostatiques, bactéricides ou fongicides, destinés aux industries alimentaires et agro-alimentaires.

Elle peut être préparée par des procédés classiques.

Avec cette composition, au moment de l'utilisation, lorsque le mélange sec sera mis en contact avec de l'eau ou avec une atmosphère humide, la présence d'eau convertira le précurseur naturel présent dans le complexe d'inclusion en l'isothiocyanate organique correspondant par hydrolyse enzymatique avec la myrosinase de la composition.

Dans ce cas, la composition est par exemple sous la forme de poudre ou de poudre mouillable.

D'autres caractéristiques et avantages de l'invention apparaîtront mieux à la lecture de la description qui suit, d'exemples de réalisation donnés bien entendu à titre illustratif et non limitatif, en référence aux dessins annexés.

**Brève description des dessins**

La figure 1 est le spectre partiel de résonance magnétique nucléaire de l'α-cyclodextrine 10 mM dans $D_2O$ à 25°C, enregistré à 500 MHz.

La figure 2 est le spectre RMN partiel du complexe α-cyclodextrine-glucosinolate de *Tropaeolum Majus* dans $D_2O$ à 25°C, enregistré à 500 MHz.

La figure 3 est le spectre RMN partiel du complexe α-cyclodextrine-benzyl ITC dans $D_2O$ à 25°C, enregistré à 500 MHz.

Les figures 4 à 6 sont des spectres RMN partiels du complexe α-cyclodextrine-glucosinolate de *Tropaeolum Majus* en présence de myrosinase à 25°C, enregistrés à 500 MHz, avant l'addition de myrosinase (figure 4), 1 h après cette addition (figure 5) et 17 h après cette addition (figure 6).

**Exposé détaillé des modes de réalisation.**

Les exemples qui suivent illustrent la préparation de complexes conformes à l'invention à partir du précurseur naturel de l'isothiocyanate de benzyle (benzyl-ITC) qui est le glucosinolate provenant de *Tropaeolum Majus.*

L'isothiocyanate de benzyle répond à la formule (III) ci-dessous :

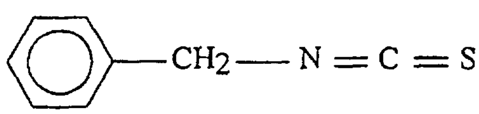

(III)

Ce composé se présente sous la forme d'un liquide huileux, insoluble dans l'eau, dont la manipulation est très délicate en raison de ses propriétés et de sa volatilité.

**Exemple 1 : Préparation d'un complexe d'inclusion du précurseur glucosinolate de l'isothiocyanate de benzyle dans l'α-cyclodexrine.**

Dans cet exemple, on prépare une solution comprenant 2,2 mg d'α-cyclodextrine dans 400 µl de tampon phosphate deutéré 50 mM, pH = 6, et on y ajoute 7,5 mg du glucosinolate précurseur de benzyl ITC provenant de *Tropaeolum Majus* ou glucotropaeoline. Ce précurseur répond à la formule :

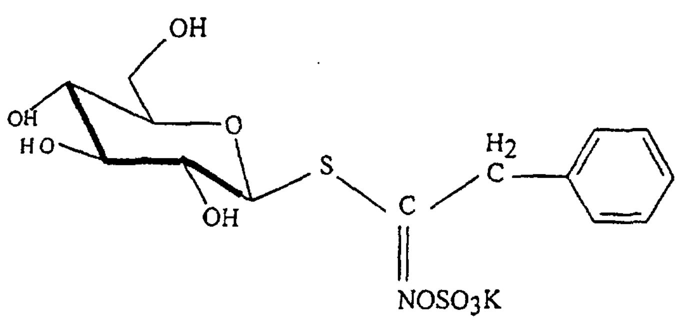

(V)

On vérifie la formation de ce complexe en enregistrant le spectre RMN à 25°C et 500 MHz de la solution avant et après l'addition du glucosinolate.

La figure 1 représente le spectre de la solution d'α-cyclodextrine avant l'addition.

La figure 2 représente le spectre RMN pris dans les mêmes conditions, après l'addition du glucosinolate (GSL).

On remarque ainsi l'apparition de signaux correspondant au glucosinolate (GSL) à 4,2, 3,7, 3,4, 3,35 et 3,28 ppm.

A titre comparatif, on a représenté sur la figure 3, le spectre RMN obtenu à 25°C et 500 MHz du complexe d'inclusion de l'isothiocyanate de benzyle (benzyl-ITC) dans l'α-cyclodextrine obtenu de la façon suivante.

On dissout 2,2 mg d'α-cyclodextrine dans 400 µl de D2O. On ajoute à cette solution 0,3 µl d'isothiocyanate de benzyle (benzyl-ITC) et on obtient ainsi le complexe d'inclusion de cet isothiocyanate dans l'α-cyclodextrine.

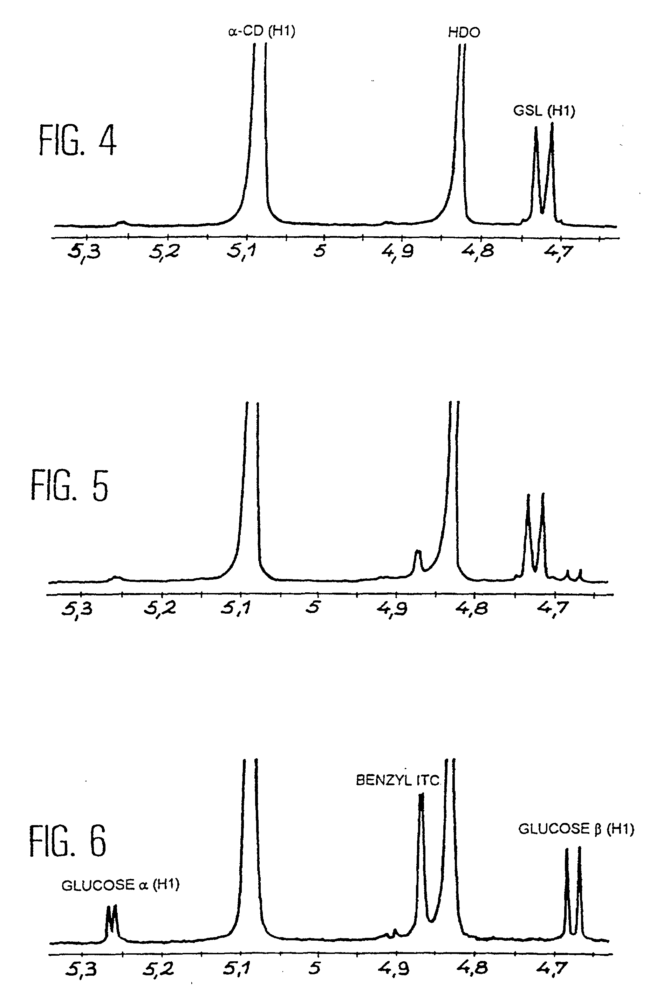

La figure 6 représente le spectre RMN obtenu après l'addition d'isothiocyanate de benzyle.

Une comparaison de ce spectre avec celui de la figure 1 montre la formation d'un complexe d'inclusion, en particulier par le déplacement des signaux des H-3 et H-5 de la cyclodextrine situés à l'intérieur de la cavité. La mise en oeuvre de méthodes de RMN bidimensionnelles permet de proposer un modèle de la structure de ce complexe dans lequel la partie benzyle du benzyl-ITC se trouve dans la cavité de la cyclodextrine.

**Exemple 2**

Dans cet exemple, on convertit le complexe d'inclusion formé dans l'exemple 1 en complexe d'inclusion d'isothiocyanate de benzyle dans la cyclodextrine.

Dans ce but, on ajoute de la myrosinase à la solution du complexe préparée dans l'exemple 1, puis on suit l'hydrolyse du glucosinolate par résonance magnétique nucléaire.

Les résultats sont donnés sur les figures 4, 5 et 6 qui illustrent les spectres RMN obtenus à 25°C et 500 MHz, avant l'addition de myrosinase (figure 4), 1 heure après l'addition de myrosinase (figure 5), et 17 heures après l'addition de myrosinase (figure 6).

Si l'on compare ces trois spectres, on remarque que le spectre de la figure 6 comprend des signaux correspondant au glucose-α, au glusose-β et à l'isothiocyanate de benzyle, signaux qui n'existaient pas sur la figure 4 et qui commençaient à se former sur la figure 5.

Par ailleurs, on note que l'iso-thiocyanate de benzyle formé par l'action de la myrosinase est toujours complexé dans la cyclodextrine et reste donc soluble en solution aqueuse.

**Références citées**

[1] : « Antimicrobial Properties of Isothiocyanates in Food Preservation » de P.J. Delaquis et G. Mazza, édité par James Giese dans « Food Technology », novembre 1995, pages 73 à 84.

[2] : « Cyclodextrins and their Industrial Uses », édité par D. Duchêne aux Editions de Santé en 1987, pages 299 à 326.


TABLEAU 1

| **Isothiocyanates $R^1$- N = C = S** | **Précurseur** | **Sources végétales** |
|---|---|---|
| $R^1$ | GSL | |
| méthyle | Glucocapparine | *Boscia senegalensis* |
| éthyle | Glucolépidine | |
| propyle | | |
| isopropyle | Glucoputranjivine | *Sysymbrium officinale (sisymbre)* |
| n-butyle | | |
| isobutyle | | |
| s-butyle | Glucocochléarine | |
| 3-méthylbutyle | | |
| 2-méthylbutyle | Glucojiaputine | |

TABLEAU 1 (suite)

| **Isothiocyanates $R^1$- N = C = S** | **Précurseur** | **Sources végétales** |
|---|---|---|
| $R^1$ | GSL | |
| allyle | Sinigrine (SIN) | *Brassica nigra (moutarde noire)* |
| but-3-ényle | Gluconapine (GNA) | *Isatis tinctoria (pastel)* |
| pent-4-enyle | Glucobrassicanapine (GBN) | |
| benzyle | Glucotropaeoline (GTL) | *Tropaeolum majus (capucine)* |
| 2-phényléthyle | Gluconasturtine (GST) | *Nasturtium officinale (cresson)* |
| p-méthoxybenzyle | Glucoaubriétine | *Aubrietia sp.* |
| m-méthoxybenzyle | Glucolimnanthine | |
| p-hyroxybenzyle | Glucosinalbine | *Sinapis alba/arvensis (moutarde blanche/ sauvage)* |
| 1)$EtCO(CH_2)_4$ | Gluconorcappasaline | |
| 2) $PrCO(CH_2)_4$ | Glucocappasaline | |
| $PrCO(CH_2)_3$ | Glucocapanguline | |
| $EtOCO(CH_2)_3$ | Glucoérypestrine | |
| 3) $MeS(CH_2)_3$ | Glucoibervirine (GIV) | |
| $MeS(CH_2)_4$ | Glucoérucine(GER) | *Eruca sativa (roquette)* |
| $MeS\ CH = CH(CH_2)_2$ | Glucoraphasatine | *Raphanus sativus (radis)* |
| $MeS(CH_2)_5$ | Glucobertéroïne, | |
| $MeS\ (CH_2)_6$ | Glucolesquerelline | *Lesquerella sp.* |
| $MeS\ (CH_2)_8$ | Glucohirsutine | *Arabis sp.* |
| $MeS(CH_2)$ 9 | Glucoarabine | *Arabis sp.* |

1) Et = éthyle
2) Pr = propyle
3) Me = méthyle

## Revendications

1. Complexe d'inclusion constitué d'un précurseur naturel d'un isothiocyanate organique, inclus dans une cyclodextrine.

2. Complexe d'inclusion selon la revendication 1, dans lequel le précurseur naturel répond à la formule :

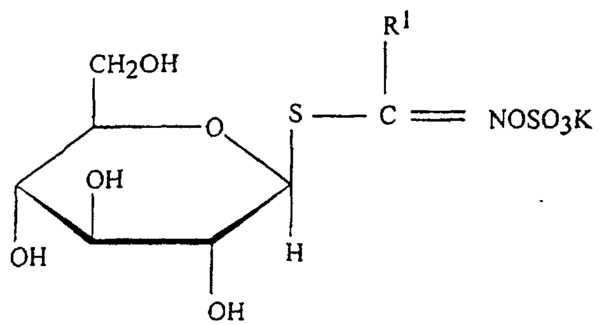

(IV)

dans laquelle $R^1$ représente un groupe alkyle, linéaire ou ramifié, de 1 à 6 atomes de carbone ; un groupe alcényle, linéaire ou ramifié, de 2 à 6 atomes de carbone ; un groupe arylalkyl dans lequel le groupe alkyle a 1 à 6 atomes de carbone ; un groupe de formule :

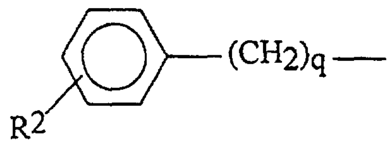

dans laquelle q = 1 ou 2 et $R^2$ représente un atome d'hydrogène ou un groupe alkyle ou alcoxyle de 1 à 3 atomes de carbone, le substituant $R^2$ étant en position ortho, para ou méta ; un groupe de formule $R^3CO(CH_2)_n$- dans laquelle $R^3$ est un groupe alkyle de 1 à 3 atomes de carbone et n est un nombre entier égal à 3 ou 4 ; un groupe de formule $R^3OCO(CH_2)_n$- dans laquelle $R^3$ et n sont tels que définis ci-dessus ; un groupe méthylthioalkyle de formule $CH_3S(CH_2)_p$- dans laquelle p est un nombre entier de 1 à 10 ; ou un groupe de formule $CH_3$-S-CH=CH-$(CH_2)_r$- dans laquelle r est un nombre entier de 1 à 8.

**3.** Complexe d'inclusion selon la revendication 1, dans lequel le précurseur naturel d'un isothiocyanate est choisi dans le groupe comprenant la glucocapparine, la glucolépidine, la glucoputranjivine, la glucocochléarine, la glucojiaputine, la sinigrine, la gluconapine, la glucobrassicanapine, la glucotropaeoline, la gluconasturtine, la glucoaubriétine, la glucolimnanthine, la glucosinalbine, la gluconorcappasaline, la glucocappasaline, la glucocapanguline, la glucoérypestrine, la glucoibervirine, la glucoérucine, la glucoraphasatine, la glucobertéroïne, la glucolesquerelline, la glucohirsutine et la glucoarabine.

**4.** Complexe d'inclusion selon l'une quelconque des revendications 1 à 3, dans lequel la cyclodextrine est l'α-cyclodextrine, la β-cyclodextrine ou la γ-cyclodextrine.

**5.** Complexe d'inclusion selon l'une quelconque des revendications 1 à 3, dans lequel la cyclodextrine répond à la formule :

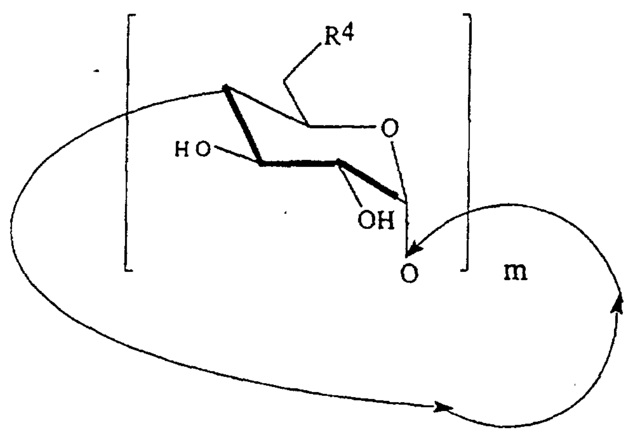

(II)

dans laquelle m = 6, 7 ou 8 et les R4 qui peuvent être identiques ou différents, représentent OH ou un groupe choisi parmi les groupes X-alkylés ou X-arylés dans lesquels X représente un atome de carbone ou un hétéroatome à condition que l'un au moins des $R^4$ ne soit pas OH.

**6.** Complexe d'inclusion selon la revendication 1, dans lequel le précurseur naturel d'isothiocyanate est la glucotropaeoline et la cyclodextrine est l'α-cyclodextrine.

**7.** Procédé de préparation d'un complexe d'inclusion d'un isothiocyanate organique dans une cyclodextrine qui comprend les étapes suivantes :

a) préparer en solution aqueuse un complexe d'inclusion d'un précurseur naturel d'un isothiocyanate organique et de cyclodextrine tel que défini dans l'une quelconque des revendications 1 à 6, et
b) soumettre le complexe ainsi obtenu à une hydrolyse enzymatique par la myrosinase pour transformer le précurseur naturel inclus dans la cyclodextrine en l'isothiocyanate organique correspondant.

**8.** Procédé selon la revendication 7, dans lequel la solution aqueuse est une solution tampon convenant à l'hydrolyse par la myrosinase.

**9.** Composition bactériostatique, bactéricide et/ou fongicide constituée par un mélange sec comprenant:

a) un complexe d'inclusion d'un précurseur naturel d'un isothiocyanate organique dans une cyclodextrine, tel que défini dans l'une quelconque des revendications 1 à 6, l'isothiocyanate présentant des propriétés bactériostatiques, bactéricides et/ou fongicides, et
b) de la myrosinase.

**10.** Composition selon la revendication 9 sous la forme de poudre ou de poudre mouillable.

**Patentansprüche**

**1.** Einschlusskomplex, bestehend aus einem natürlichen Vorläufer eines organischen Isothiocyanats, eingeschlossen in einem Cyclodextrin.

**2.** Einschlusskomplex nach Anspruch 1, in welchem der natürliche Vorläufer der Formel:

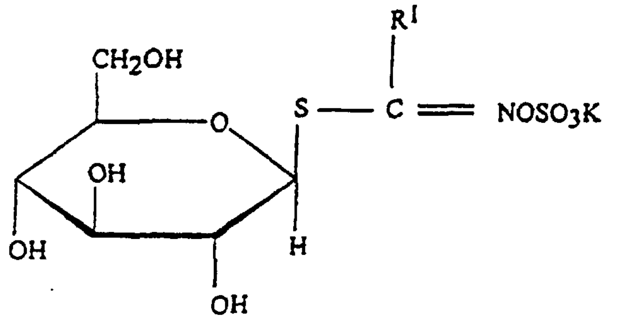

(IV)

entspricht, in welcher $R^1$ darstellt: eine lineare oder verzweigte Alkylgruppe von 1 bis 6 Kohlenstoffatomen; eine lineare oder verzweigte Alkenylgruppe von 2 bis 6 Kohlenstoffatomen; eine Aralkylgruppe, in welcher die Alkylgruppe 1 bis 6 Kohlenstoffatome hat; eine Gruppe der Formel:

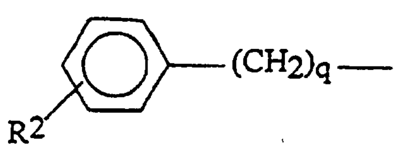

in welcher q = 1 oder 2 und $R^2$ ein Wasserstoffatom oder eine Alkyl- oder Alkoxygruppe von 1 bis 3 Kohlenstoffatomen darstellt, wobei der Substituent $R^2$ in ortho-, para- oder meta-Stellung ist; eine Gruppe der Formel $R^3CO(CH_2)_n$-, in welcher $R^3$ eine Alkylgruppe von 1 bis 3 Kohlenstoffatomen ist und n eine ganze Zahl gleich 3 oder 4 ist; eine Gruppe der Formel $R^3OCO(CH_2)_n$-, in welcher $R^3$ und n wie oben definiert sind; eine Methylthioalkylgruppe der Formel $CH_3S(CH_2)_p$-, in welcher p eine ganze Zahl von 1 bis 10 ist; oder eine Gruppe der Formel $CH_2$-S-CH=CH-$(CH_2)_r$-, in welcher r eine ganze Zahl von 1 bis 8 ist.

**3.** Einschlusskomplex nach Anspruch 1, in welchem der natürliche Vorläufer eines Isothiocyanats in der Gruppe gewählt ist, die Glucocapparin, Glucolepidin, Glucoputranjivin, Glucocochlearin, Glucojiaputin, Sinigrin, Gluconapin, Glucobrassicanapin, Glucotropäolin, Gluconasturtin, Glucoaubrietin, Glucolimnanthin, Glucosinalbin, Gluconorcappasalin, Glucocappasalin, Glucocapangulin, Glucoerypestrin, Glucoibervirin, Glucoerucin, Glucoraphasatin, Glucoberteroin, Glucolesquerellin, Glucohirsutin und Glucoarabin umfasst.

**4.** Einschlusskomplex nach einem der Ansprüche 1 bis 3, in welchem das Cyclodextrin α-Cyclodextrin, β-Cyclodextrin oder γ-Cyclodextrin ist.

**5.** Einschlusskomplex nach einem der Ansprüche 1 bis 3, in welchem das Cyclodextrin der Formel:

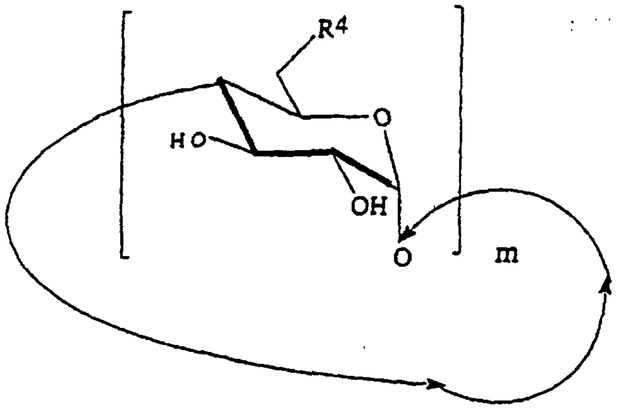

(II)

entspricht, in welcher m = 6, 7 oder 8 und die $R^4$, die identisch oder verschieden sein können, OH oder eine unter den X-alkylierten oder X-arylierten Gruppen, in welchen X ein Kohlenstoffatom oder ein Heteroatom darstellt, gewählte Gruppe darstellen, unter der Bedingung, dass wenigstens eines der $R^4$ nicht OH ist.

**6.** Einschlusskomplex nach Anspruch 1, in welchem der natürliche Vorläufer eines Isothiocyanats Glucotropäolin ist und das Cyclodextrin α-Cyclodextrin ist.

**7.** Verfahren zur Herstellung eines Einschlusskomplexes eines organischen Isothiocyanats in einem Cyclodextrin, das die folgenden Schritte umfasst:

a) in wässriger Lösung einen Einschlusskomplex eines natürlichen Vorläufers eines organischen Isothiocyanats und eines Cyclodextrins wie in einem der Ansprüche 1 bis 6 definiert herzustellen und
b) den so erhaltenen Komplex einer enzymatischen Hydrolyse durch Myrosinase zu unterziehen, um den in dem Cyclodextrin eingeschlossenen natürlichen Vorläufer in das entsprechende organische Isothiocyanat umzuwandeln.

**8.** Verfahren nach Anspruch 7, in welchem die wässrige Lösung eine Pufferlösung ist, die für die Hydrolyse durch Myrosinase geeignet ist.

**9.** Bakteriostatische, bakterizide und/oder fungizide Zusammensetzung, bestehend aus einer trockenen Mischung umfassend:

a) einen Einschlusskomplex eines natürlichen Vorläufers eines organischen Isothiocyanats in einem Cyclodextrin wie in einem der Ansprüche 1 bis 6 definiert, wobei das Isothiocyanat bakteriostatische, bakterizide und/oder fungizide Eigenschaften aufweist, und
b) Myrosinase.

**10.** Zusammensetzung nach Anspruch 9 in Form eines Pulvers oder eines benetzbaren Pulvers.

## Claims

**1.** Inclusion complex made up of a natural precursor of an organic isothiocyanate, included in a cyclodextrin.

**2.** Inclusion complex according to claim 1, in which the natural precursor meets the formula:

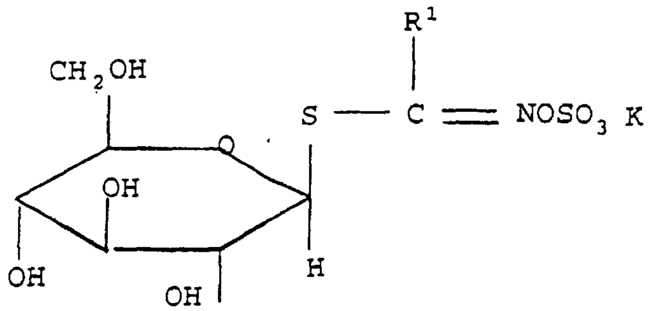

(IV)

in which $R^1$ represents an alkyl group, linear or branched, with 1 to 6 carbon atoms; an alkenyl group, linear or branched, with 2 to 6 carbon atoms; an arylalkyl group in which the alkyl group has 1 to 6 carbon atoms; a group with the formula:

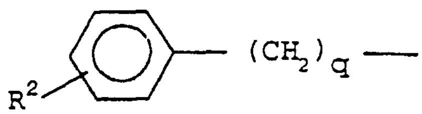

in which q = 1 or 2 and $R^2$ represents a hydrogen atom or an alkyl or alkoxyl group with 1 to 3 carbon atoms, the substituent $R^2$ being in ortho, para or meta position; a group with the formula $R^3CO(CH_2)_n$ - in which $R^3$ is an alkyl group with 1 to 3 carbon atoms and n is a whole number of 3 or 4; a group with the formula $R^3OCO(CH_2)_n$- in which $R^3$ and n are as defined above; a methylthioalkyl group with the formula $CH_3S(CH_2)_p$- in which p is a whole number from 1 to 10; or a group with the formula $CH_3$-S-CH=CH-$(CH_2)_r$- in which r is a whole number from 1 to 8.

**3.** Inclusion complex according to claim 1, in which the natural precursor of an isothiocyanate is chosen from the group comprising glucoapparin, glucolepidin, glucoputranjivin, glucocochlearin, glucojiaputin, sinigrin, glucoapin, glucobrassicanapin, glucotropaeolin, gluconasturtin, glucoaibrietin, glucolimnanthin, glucosinalbin, gluconorcappasalin, glucocappasalin, glucocapangulin, glucoerypestrin, glucoibervirin, glucoerucin, glucoraphasatin, glucoberteroin, glucolesquerellin, glucohirsutin and glucoarabin.

**4.** Inclusion complexes according to any of claims 1 to 3, in which the cyclodextrin is α-cyclodextrin, β-cyclodextrin or γ-cyclodextrin.

**5.** Inclusion complex according to any of claims 1 to 3, in which the cyclodextrin meets the formula:

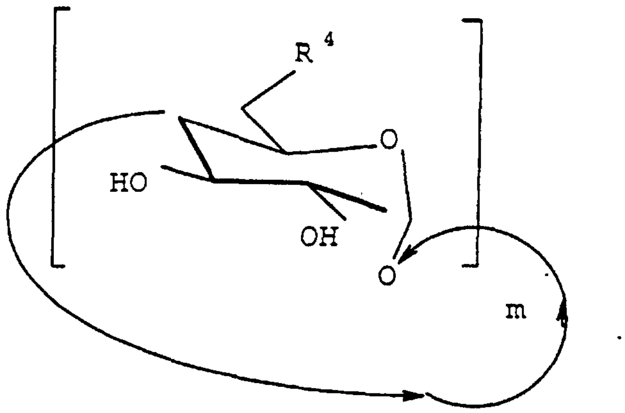

(II)

in which m = 6, 7 or 8 and the $R^4$s which may be identical or different, represent OH or a group chosen from among the X-alkylated or X-arylated groups in which X represents a carbon atom or a heteroatom provided that at least one of the $R^4$s is not OH.

**6.** Inclusion complex according to claim 1, in which the natural precursor of isothiocyanate is glucotropaeolin and the cyclodextrin is α-cyclodextrin.

**7.** Method for preparing an inclusion complex of a natural precursor of an organic isothiocyanate in a cyclodextrin which comprises the following steps:

a) Preparing, in an aqueous solution, an inclusion complex of an organic isothiocyanate in cyclodextrin such as defined in any of claims 1 to 6, and
b) submitting the complex so obtained to enzymatic hydrolysis with myrosinase to convert the natural precursor included in the cyclodextrin into the corresponding organic isothiocyanate.

**8.** Method according to claim 7, in which the aqueous solution is a buffer solution suitable for hydrolysis with myrosinase.

**9.** Bacteriostatic, bactericidal and/or fungicidal composition made up of a dry mixture comprising:

a) an inclusion complex of a natural precursor of an organic isothiocyanate in a cyclodextrin, such as defined in any of claims 1 to 6, the isothiocyanate having bacteriostatic, bactericidal and/or fungicidal properties and,
b) myrosinase.

**10.** Composition according to claim 9 in powder or wettable powder form.

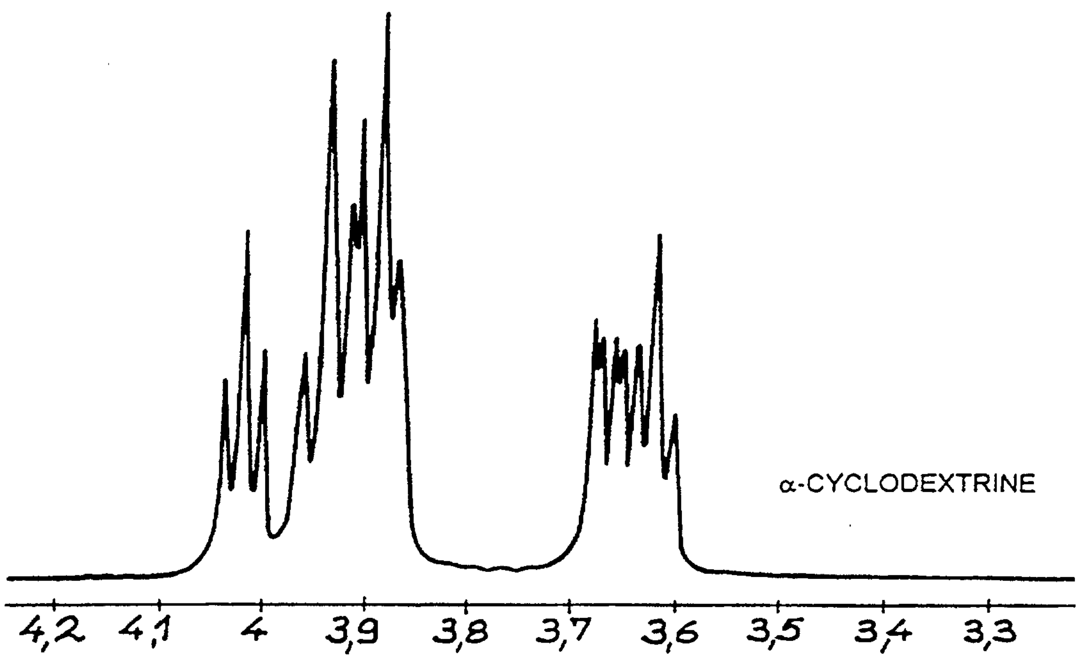
α-CYCLODEXTRINE
4,2
4,1
4
3,9
3,8
3,7
3,6
3,5
3,4
3,3

FIG. 1

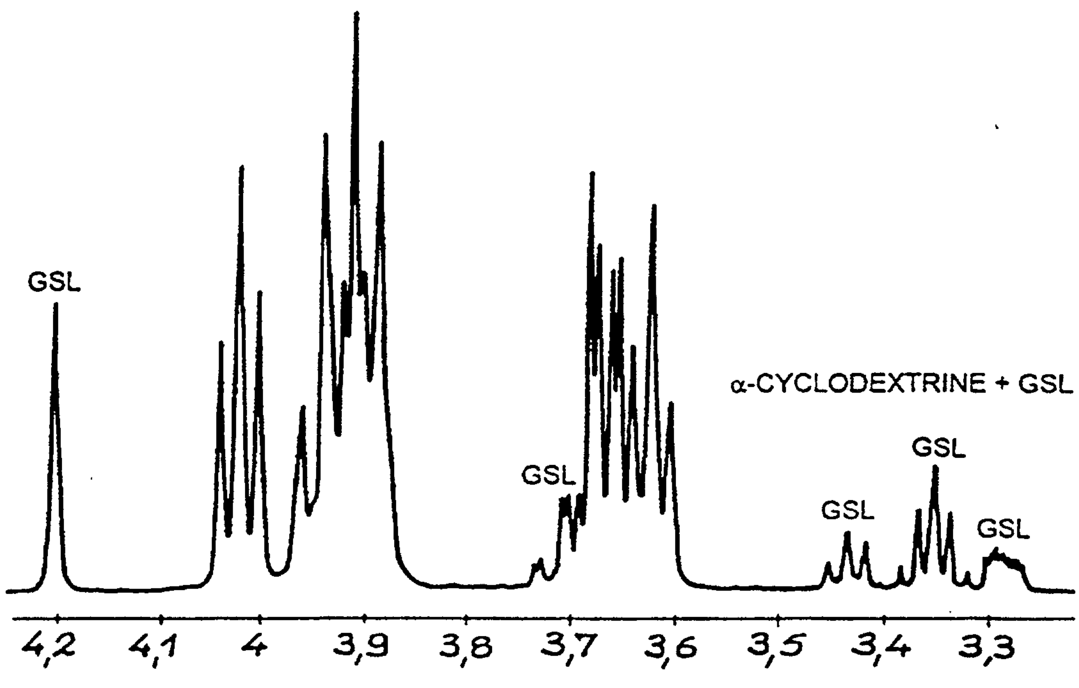
GSL
α-CYCLODEXTRINE + GSL
GSL
GSL
GSL
GSL
4,2
4,1
4
3,9
3,8
3,7
3,6
3,5
3,4
3,3

FIG. 2

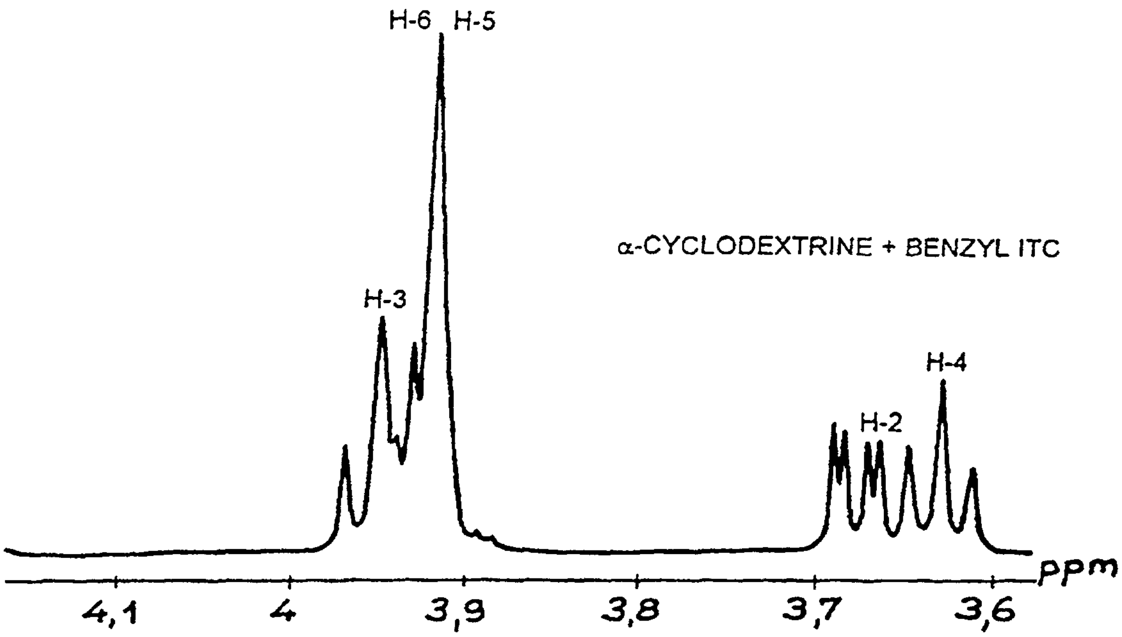


FIG. 3

FIG. 4

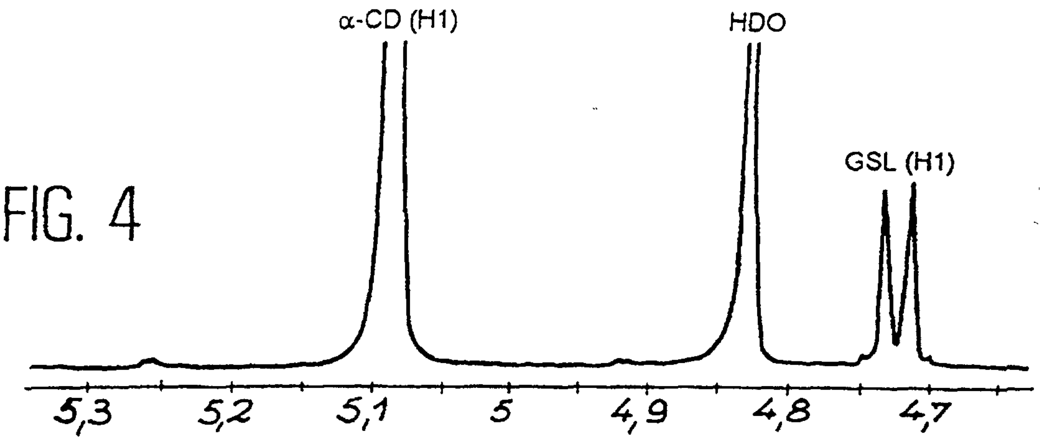


FIG. 5

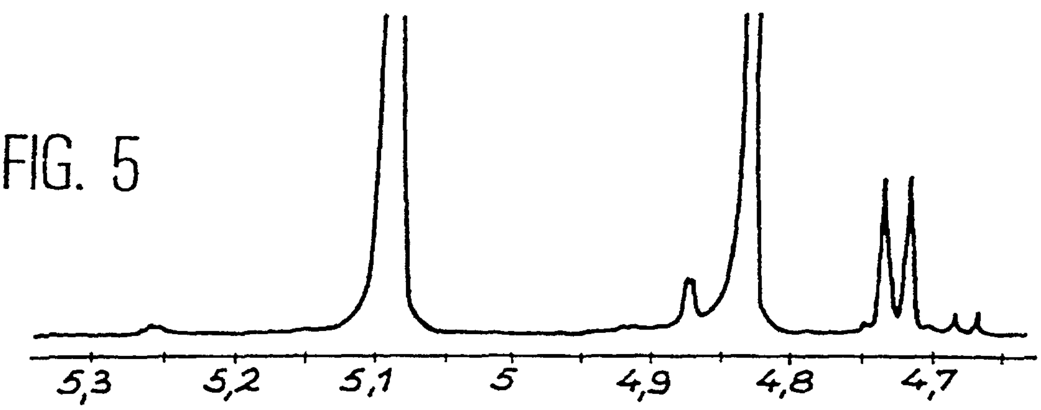


FIG. 6